# FASCICULE DE BREVET EUROPEEN

(11) **EP 2 170 626 B1**
(45) Date de publication et mention de la délivrance du brevet: **16.03.2011**
(21) Numéro de dépôt: 08760603.4
(22) Date de dépôt: 05.06.2008
(51) Int. Cl.: B60B 1/02, B60B 5/02, B60B 9/26, B60C 17/00

(54) **ROUE PNEUMATIQUE A MOBILITE ETENDUE**
RAD MIT EINEM REIFEN MIT NOTLAUFEIGENSCHAFTEN
EXTENDED MOBILITY TYRE WHEEL

(30) Priorité: 28.06.2007 FR 0704732
(43) Date de publication de la demande: 07.04.2010
(73) Titulaire: Société de Technologie MICHELIN, 63000 Clermont-Ferrand (FR); MICHELIN Recherche et Technique S.A., 1763 Granges-Paccot (CH)
(72) Inventeur: MERINO LOPEZ, Jose, F-63200 Riom (FR)
(74) Mandataire: Randl, Oliver Georg
(86) Numéro de dépôt international: PCT/EP2008/057028
(87) Numéro de publication internationale: WO 2009/000627

(56) Documents cités:
- WO-A-2005/007422
- WO-A-2006/112574

## Description

### DOMAINE DE L'INVENTION

La présente invention est relative aux roues de véhicule. Elle vise plus particulièrement les roues du type pneumatique dit à mobilité étendue, c'est à dire capables de continuer à fonctionner dans des conditions convenables pendant un certain laps de temps après une perte substantielle ou totale de leur pression de service.

### ETAT DE LA TECHNIQUE

On sait que malgré leurs nombreux avantages sur le plan de la masse, du comportement, de l'endurance, du confort et de la faible résistance au roulement, entre autres, les roues pneumatiques sont sujettes aux aléas de pertes de pression de gonflage en fonctionnement qui, en l'absence de précaution particulière, imposent parfois un arrêt immédiat du véhicule jusqu'à ce que la pression de gonflage puisse être rétablie, souvent par un changement de la roue elle-même.

A cet égard le système des roues de secours ne représente qu' un remède partiel puisqu'il ne supprime pas les risques afférents à la poursuite du roulage dans les premiers instants suivant une perte de pression importante et à l'arrêt intempestif du véhicule dans un environnement qui peut être rendu dangereux par la présence d'autres véhicules roulant souvent à vitesse élevée.

De nombreux efforts ont été tentés pour remédier à cette situation dans des conditions globalement acceptables par le marché, à défaut de contraintes réglementaires qui risqueraient elles-mêmes de soulever des difficultés propres à les rendre rédhibitoires.

On a ainsi vu par le passé se développer deux axes de solutions qui ont fait l'objet de très nombreuses propositions. La première repose sur un renforcement des flancs des pneumatiques pour permettre à ceux-ci de continuer à supporter leur part de la charge du véhicule même après une perte de leur pression de service. La deuxième classe de solutions repose sur l'emploi d'un appui de soutien sur la jante à l'intérieur de l'enveloppe pneumatique, sur lequel peut venir s'appuyer le sommet du pneumatique en cas de perte de sa pression interne, de façon à permettre au roulage de se poursuivre pendant quelques temps.

Dans tous les cas ces solutions se sont révélées pénalisantes à un titre ou un autre, notamment dans les applications à des véhicules de tourisme où les compromis à réaliser entre les différentes contraintes de réalisation et de performance, y compris économiques, sont particulièrement difficiles à satisfaire.

D'autres types de solutions ont par ailleurs été développées.

A titre d'exemple, le document WO 2006/112574 divulgue l'utilisation d'une roue à ressorts en combinaison avec des bandages pneumatiques ou non pneumatiques. L'utilisation de bandages non pneumatiques est suggérée pour réduire les risques liés à une crevaison.

D'autres solutions de roue non pneumatique développées par les demandeurs et leur sociétés apparentées (cf. par exemple le brevet US 6 769 465). Une telle roue comprend un bandage de roulement constitué par un anneau flexible rattaché à un deuxième anneau disposé radialement à l'intérieur du premier par un faisceau de rayons de suspension répartis autour de l'axe de roue entre ces deux anneaux. Ce deuxième anneau est monté dans, ou rattaché à, une structure de moyeu fixée à un porte roue du véhicule. En roulage le poids du véhicule et les efforts dynamiques qui sont transmis à la roue provoquent la mise en tension des rayons reliant les secteurs supérieurs des deux anneaux (c'est-à-dire dans la moitié de roue la plus éloignée de la surface de roulement en provoquant ainsi une certaine ovalisation de l'anneau de bande de roulement et un certain aplatissement de sa face inférieure pour former un aire de contact avec le sol. Les rayons de suspension sont conçus de manière telle qu'ils n'exercent pas d'effort de compression sensible entre les secteurs des deux anneaux en regard dans la partie basse de la roue vis-à-vis de l'aire de contact. Ils se déforment par flambage sans s'opposer aux déformations locales de l'anneau de bande de roulement en contact avec le sol sous l'effet d'obstacles ou autres inégalités du sol de roulage. Ainsi se trouve réalisée une absorption des chocs et un certaine suspension du véhicule par la roue elle-même.

Le document WO 2005/007422 divulgue une roue de véhicule comprenant une bande de roulement sur un anneau de jante sur lequel la bande de roulement est montée, l'anneau de jante étant susceptible de fléchir élastiquement sous des efforts à composante radiale et rattaché à un anneau de support par des éléments de liaison présentant une résistance à la traction supérieure à la résistance à la compression et susceptibles de se déformer par flexion sous l'effet de charges. Cette roue répond à l'objectif de garantir une mobilité étendue, car elle s'affranchit de toute composante pneumatique. Son inconvénient réside dans le fait que l'anneau de jante est constamment mis à plat dans l'aire de contact, ce qui limite son endurance.

Face à ces difficultés, la présente invention vise à améliorer le compromis de réalisation et de performance évoqué ci-dessus en proposant un nouveau type de roue pneumatique à mobilité étendue.

Pour pallier ces différents inconvénients, l'invention prévoit une roue de véhicule comprenant une enveloppe permettant de supporter une charge qui lui est appliquée par le véhicule lorsqu'elle est en appui sur une surface de roulement, sur un anneau de jante sur lequel ladite enveloppe pneumatique est susceptible d'être montée, ledit anneau de jante étant susceptible de fléchir élastiquement sous des efforts à composante radiale et rattaché à un anneau de support par des éléments de liaison présentant une résistance à la traction supérieure à la résistance à la compression et susceptibles de se déformer par flexion sous l'effet de charges correspondant sensiblement à des efforts subis lors du roulage du véhicule en condition standard, l'anneau de support comportant une rigidité supérieure à l'anneau de jante, caractérisée en ce que ladite enveloppe est une enveloppe pneumatique gonflable à une pression, en ce que l'anneau de jante (14) comprend une bande de matériau élastomérique flexible en réponse aux composantes radiales des efforts qui lui sont appliqués et capable de résister par arc-boutement à un affaissement de sa structure, et en ce que la bande de matériau élastomérique comprend une couche élastomérique et une armature de précontrainte accolée ou intégrée à cette couche et sensiblement inextensible.

Ainsi, selon l'invention, on dispose d'une solution de roulage pneumatique à jante déformable qui réalise un compromis inédit entre de nombreuses performance désirables dans les véhicules notamment, mais non exclusivement les véhicules à moteur. Il est apparu que l'on pouvait tirer avantage des bonnes performances propres aux solutions de roulage pneumatique, adhérence, confort mécanique et endurance même pour les déplacements à vitesse relativement élevée, durée sur usure, résistance au roulement, tout en bénéficiant d'une amélioration importante de la mobilité étendue et cela, sans pénaliser, voire même en améliorant la résistance de l'ensemble roulant aux impacts de la chaussée (incidents dits de "strikethrough") causés par la rencontre d'obstacles importants sur le passage de la bande de roulement. La solution permet d'ajouter une capacité de déformation de la jante allier les avantages de déformabilité et d'amortissement inhérents à la pression d'air avec s inhérents.

Elle fournit également une capacité de support de la surface de roulement du pneumatique en cas de perte de pression avec une certaine souplesse fournie par la déformabilité de la jante. Elle permet ainsi la poursuite d'un trajet pendant un temps suffisant pour sortir des zones de danger et s'acheminer vers un lieu d'étape et/ou de réparation, moyennant précautions appropriées.

Contrairement à WO 2005/007422**,** dont l'objectif est précisément d'enlever la composante pneumatique, l'invention propose un fonctionnement de pneumatique et n'utilise le principe divulgué dans WO 20051007422 uniquement comme mode auxiliaire et temporaire, en cas de perte de pression. Autrement dit, la roue selon l'invention comporte l'avantage de mettre a plat l'anneau de jante uniquement lors d'un roulage à plat, qui est provisoire.

Une différence notable entre la roue selon l'invention et les roues de l'art antérieur réside donc dans le comportement de l'anneau de jante déformable. Le document WO 2005/007422**,** qui divulgue une roue de véhicule correspondant au préambule de la revendication 1, possède un anneau déformable qui se met à plat en roulage. En ce qui concerne la solution décrite dans le document WO 2006/112574**,** la jante, qui est suspendue par des ressorts ne se met jamais à plat, car elle est rigide. Si cette roue est utilisée avec un pneumatique et ce dernier perd sa pression, l'aire de contact est très petite et générée exclusivement par la rigidité des composantes en caoutchouc du pneumatique. La roue elle-même est très rigide et ne se déforme quasiment pas en roulage standard avec un pneu gonflé.

Dans une roue selon l'invention, l'anneau déformable ne se met pas à plat. Il se déforme donc beaucoup moins que l'anneau de jante décrit dans WO 2005/007422**,** ce qui a pour effet d'améliorer son endurance. La déformation est cependant nettement plus importante que dans la roue selon WO 2006/112574 **:** l'anneau s'ovalise. Il y a donc une différence beaucoup moins prononcée entre les modes gonflé et non gonflé. Lorsque le pneumatique est gonflé, l'anneau se déforme (s'ovalise), lorsque le pneumatique est dégonflé, l'anneau se met à plat. La roue selon l'invention permet donc un fonctionnement intermédiaire qui ne peut pas être obtenu avec les solutions de l'art antérieur.

Selon un mode de réalisation avantageux, les éléments de liaison sont des lamelles souples réparties autour de l'axe de roue entre l'anneau de support et l'anneau de jante. Lesdits éléments de liaison sont de préférence disposées de façon sensiblement radiale. Lesdites lamelles sont de préférence constituées d'un matériau élastomérique tendu entre l'anneau de jante et l'anneau de support.

De manière avantageuse, lesdits rayons sont intégralement liés par une extrémité à la surface radiale interne de l'anneau de jante.

Selon un mode de réalisation avantageux, la surface radiale externe dudit anneau de jante est adaptée pour supporter la face radiale interne d'une enveloppe pneumatique fermée.

Selon un autre mode de réalisation avantageux, la surface radiale externe de l'anneau de jante comporte deux portées de jantes et l'enveloppe pneumatique comporte deux sièges d'appui et propres à se monter sur lesdites portées de jantes . Dans un tel exemple, l'enveloppe pneumatique est de préférence montée de façon démontable à la périphérie de l'anneau de jante .

Selon un autre exemple de réalisation, l'anneau de jante comprend une 1 couche de cisaillement en matériau élastique placée en sandwich entre deux armatures de renfort quasi-inextensibles.

L'anneau de jante, les éléments de liaison et l'anneau de support peuvent être construits en une seule pièce.

Selon un mode de réalisation avantageux, l'enveloppe pneumatique est fermée, et la surface radiale externe dudit anneau de jante est adaptée pour supporter la face radiale interne de ladite enveloppe pneumatique fermée. Ainsi, lorsque ledit sommet de l'enveloppe pneumatique s'affaisse par suite d'une perte substantielle de la pression de gonflage, la paroi interne du sommet de l'enveloppe pneumatique fournie un appui en reposant contre la face radiale interne de l'enveloppe pneumatique fermée, et la portion radialement inférieure de l'anneau de jante subit un aplatissement plus prononcé qu'avant ladite perte de pression.

Selon un autre mode de réalisation avantageux, l'enveloppe pneumatique comporte une armature de carcasse possédant une extrémité dans chaque bourrelet de l'enveloppe pneumatique et un ancrage pour cette extrémité comprenant des moyens d'ancrage disposés de façon à former un angle d'ancrage inférieur à 30 degrés par rapport à une direction axiale lorsque ledit pneumatique est assemblé. Ledit angle d'ancrage est favorablement inférieur à 15 degrés.

Une telle disposition de l'ancrage permet la mise à plat de la zone basse de la roue, contrairement à un ancrage classique comportant par exemple une tringle dont la rigidité empêcherait une telle mise à plat.

Selon ce mode de réalisation, ledit moyen d'ancrage comporte de préférence au moins une série de renforts filaires disposés sensiblement parallèlement à la surface de ladite extrémité de carcasse sur une face au moins de ladite extrémité. La surface radiale externe de l'anneau de jante comporte alors deux portées de jantes et l'enveloppe pneumatique comporte deux sièges d'appui propres à se monter sur lesdites portées de jantes.

En fonctionnement, lorsque ledit sommet de l'enveloppe pneumatique s'affaisse par suite d'une perte substantielle de la pression de gonflage, la paroi interne du sommet de l'enveloppe pneumatique fournie un appui en reposant d'une part contre les portions internes des bourrelets et d'autre part contre l'anneau de jante et la portion radialement inférieure de l'anneau de jante subit un aplatissement plus prononcé qu'avant ladite perte de pression.

L'enveloppe pneumatique peut-être fermée pour former un tore. Elle peut également être ouverte pour venir en contact avec la surface radialement externe de l'anneau de jante suivant deux portées circonférentielles, étanches dans une réalisation sans chambre ("tubeless"). Elle peut être avantageusement montée à demeure sur cette jante, par collage par exemple. Elle peut naturellement être réalisée de façon amovible selon l'un des nombreux procédés disponibles, l'opération de gonflage contribuant à la solidariser fortement l'enveloppe et la jante comme il est connu. A cet égard on peut utiliser le système traditionnel de la monte par bourrelet sur un siège d'étanchéité pourvu de crochet de jante. On peut aussi utiliser différente formes de fixation enclipsable, particulièrement en cas d'enveloppe fermée.

Plusieurs formes de réalisation sont possibles pour la jante de roue à rayons de suspension. Ainsi, l'anneau de jante peut être réalisé à l'aide d'une bande de matériau élastomérique flexible, en réponse aux efforts possédant une composante de direction radiale, et comportant une armature de renfort sensiblement inextensible intégrée à cette bande. Cette armature améliore la "tenue" du matériau élastomérique qui est capable de fléchir élastiquement perpendiculairement à la surface de la bande tout en conservant la raideur nécessaire pour ne pas s'affaisser sous les efforts mais au contraire pour être capable de s'arc-bouter en réponse aux sollicitations radiales.

Selon un autre mode de réalisation, l'anneau de jante peut comprendre une couche de cisaillement en un matériau élastomérique, placée en sandwich entre deux armatures de renfort quasi-inextensibles qui lui confèrent la raideur nécessaire dans les directions parallèles à sa surface en autorisant les déformation radiales.

Les rayons de suspension peuvent être constitués par des voiles relativement souples de matériau élastomérique. Ils peuvent être intégralement formés avec la surface radiale interne de l'anneau de jante. Selon une mode de réalisation, un deuxième anneau, dit interne ici, est agencé dans une position radialement interne par rapport à l'anneau de jante auquel il est raccordé par les rayons de suspension. Cet anneau interne est solidarisé avec le dispositif de moyeu, par exemple par fixation sur le pourtour d'un bloc moyeu destiné à être monté sur le porte roue du véhicule. Dans une réalisation, les rayons de suspension sont intégralement moulés ou autrement liés avec l'anneau interne, l'ensemble dudit anneau interne de l'anneau de jante et des rayon de suspension pouvant alors constituer une pièce autonome.

### BREVE DESCRIPTION DES FIGURES

D'autres caractéristiques et avantages de l'invention ressortent de la description faite ci-après en référence aux dessins annexés qui montrent, à titre d'exemples non limitatifs, des formes de réalisation de l'objet de l'invention et dans lesquels:

la figure 1 est une vue schématique d'une coupe par une plan équatorial (c'est-à-dire de symétrie perpendiculaire à l'axe) d'un exemple de réalisation d'une roue incorporant les principes de l'invention, comportant un pneu-jante dont l'enveloppe pneumatique est gonflée de gaz sous pression mais sans contact avec une surface de roulement;

la figure 2 est une vue analogue à celle de la figure 1 lorsque l'enveloppe pneumatique est gonflée à sa pression de service et soumise à la charge du véhicule, en contact avec une surface de roulement;

la figure 3 représente la roue des figures 1 et 2 lorsque l'enveloppe pneumatique en contact avec le sol a perdu sa pression de gonflage;

les figures 4a, 4b et 4c sont des vues en coupe par un plan radial (plan passant par l'axe de la roue) de l'enveloppe pneumatique, respectivement en mode gonflé sans contact avec le sol, en mode gonflé sous charge en contact avec le sol et après une perte de pression sous charge et en contact avec le sol;

la figure 5 représente une vue en perspective d'une jante propre à recevoir une enveloppe pneumatique démontable dans une roue selon l'invention,

la figure 6 est une vue d'une coupe partielle par un plan radial d'une roue avec une enveloppe pneumatique démontable, gonflée, en contact sous charge avec le sol; et

la figure 7 est une vue dans un plan radial d'un rayon de liaison entre un anneau de jante et le dispositif de moyeu d'une roue décrite à titre d'exemple.

### DESCRIPTION D'UN OU PLUSIEURS EXEMPLES DE REALISATION

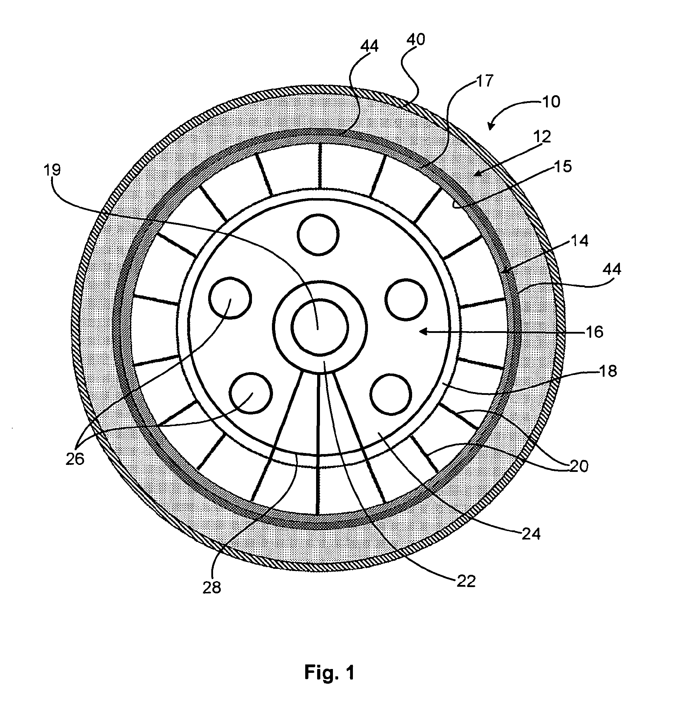

Dans l'exemple représenté aux figures 1, 2 et 3 , une roue pneumatique 10 comprend une enveloppe pneumatique 12 montée autour d'un anneau de jante 14. Celle-ci est essentiellement constituée par une bande annulaire capable de fléchir élastiquement sous l'action de forces perpendiculaires à sa surface (ou à la direction de l'axe de roue), tout en conservant une tenue propre qui permet à l'anneau de s'ovaliser ou de se déformer suivant d'autres géométries sans s'affaisser. La face 15 radialement interne de cette bande est raccordée à un dispositif de moyeu 16 par un faisceau de rayons 20 s'étendant dans des directions sensiblement radiales répartis circulairement autour de l'anneau de jante 14. Le dispositif de moyeu 16, centré sur l'axe géométrique 19 de la roue 10, comprend un bloc de moyeu proprement dit 22, au centre d'un disque par exemple métallique 24, percé d'ouvertures d'aération et de fixation à un porte roue solidaire du véhicule, très schématiquement représentées en 26. A la périphérie du disque 24 est fixée une portée cylindrique 28 sur laquelle est rapporté et maintenu, par collage par exemple, un anneau interne en élastomère 18. Les rayons 20, au nombre de 18 dans cet exemple, sont constitués par des voiles souples d'un matériau élastomérique capables de supporter des efforts de traction engendrés par le fonctionnement de la roue, comme il sera expliqué ci-après, entre l'anneau de jante 14 et l'anneau interne 18 du dispositif de moyeu 16. En revanche ces rayons peuvent flamber sans offrir pratiquement de résistance de compression lorsque leurs points d'attache se rapprochent l'un de l'autre.

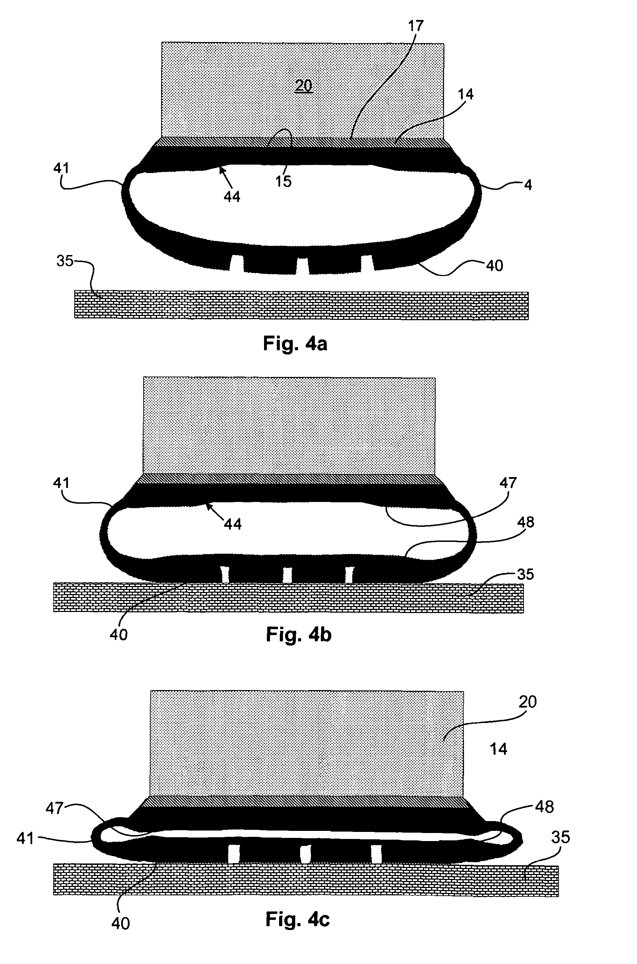

Selon un premier mode de réalisation, l'enveloppe pneumatique 12 comporte un sommet revêtu d'une bande de roulement 40, entaillée par une sculpture, destinée à assurer le contact avec une surface de roulement 35. Des parois de flanc 41 (figures 4a à c) relient les bords latéraux du sommet à une paroi 44 en zone basse du pneumatique montée sur la face radiale externe 17 de l'anneau de jante 14. L'enveloppe possède une armature de carcasse qui s'étend d'une extrémité de flanc à l'autre en passant sous la bande de roulement 40 au sommet de l'enveloppe. Le sommet de l'enveloppe peut-être avantageusement renforcé par une armature de sommet de type connu, non représentée. Dans l'exemple de réalisation ici décrit la paroi basse 44 de l'enveloppe 12 est fermée. L'armature de carcasse se referme dans la paroi basse 44 et la face radiale interne de cette paroi 44, de forme sensiblement cylindrique, est solidarisée avec la surface 17 de l'anneau de jante, ici par collage, sur toute sa largeur, mesurée dans la direction de l'axe 19.

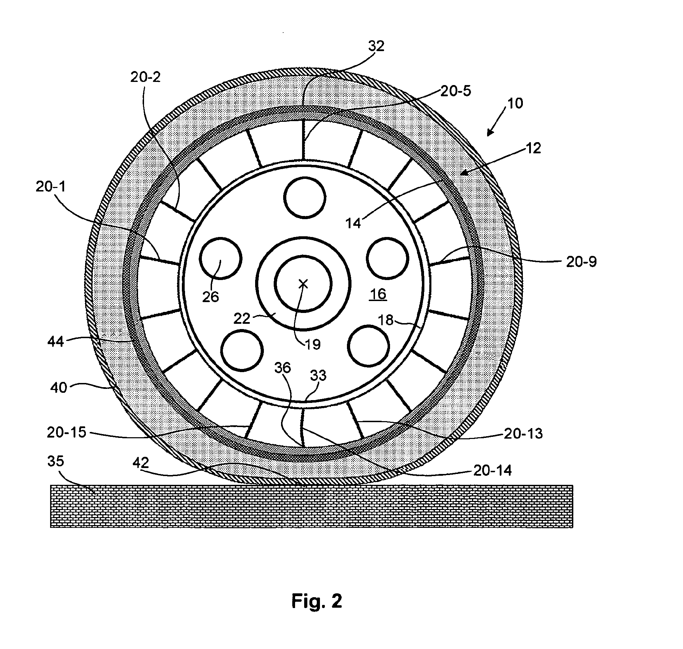

Comme représenté aux figures 1 et 4a, l'enveloppe 12 est gonflée à une pression d'air de plusieurs bars. Elle est équipée à cet effet d'une valve de gonflage non représentée grâce à laquelle la pression de service correcte peut être insufflée pour le fonctionnement de la roue. Bien entendu cette pression contribue au serrage de l'enveloppe sur l'anneau dans le roulage en mode gonflé. Lorsque la roue 10 ainsi gonflée est en contact avec la surface de roulement 35, elle est capable de supporter la charge d'un véhicule sur lequel elle est montée, comme représenté aux figures 2 et 4b.

Conformément à l'invention, au lieu d'être supportée par une jante classique indéformable, l'enveloppe pneumatique 12 est supportée par une structure flexible possédant une capacité de déformation cyclique à chaque tour de roue doublée d'une certaine résilience permettant à l'anneau de jante d'absorber élastiquement les impacts lorsque l'enveloppe pneumatique 12 est écrasée contre l'anneau de jante 14 à la suite d'un heurt d'obstacle suffisamment violent par la bande de roulement 40.

A cet effet, l'anneau de jante 14 et le faisceau de rayons 20 sont constitués selon les principes d'une roue élastique à rayons de suspension déformables par flambage en compression décrite par exemple dans la demande de brevet internationale des demandeurs publiée sous le numéro WO 2005/007422A1. L'anneau de jante 14 est formé par une couche cylindrique d'un matériau élastomérique possédant une rigidité de résistance élastique au cisaillement suffisante pour lui permettre de modifier localement sa courbure sous charge ou à la rencontre d'un obstacle sans s'effondrer, par un effet d'arc-boutement, et d'adapter ses déformations à la variation des charges ou de leur point d'application au cours de chaque tour de roue.

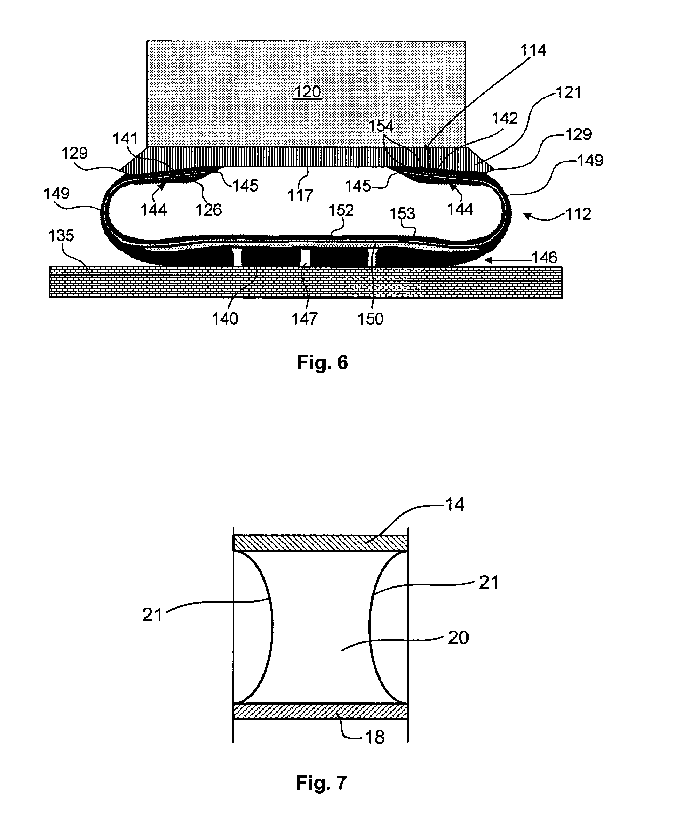

Les rayons 20 sont constitués par des voiles de matériau élastomérique dont la surface s'étend transversalement par rapport au plan des figures 1, 2 et 3; dans l'exemple présenté les plans des voiles des rayons 20 sont parallèles à l'axe 19. Dans le sens axial ces rayons sont limités par deux arêtes 21 qui présentent ici une forme incurvée axialement vers l'intérieur de la roue comme représenté schématiquement à la figure 7. Dans l'exemple de réalisation représenté les attaches des voiles de chaque rayon à l'anneau de jante 14, d'une part, et à l'anneau interne 18, d'autre part, sont situées dans un même plan radial contenant l'axe 19. Comme il est expliqué dans le document WO 2005/007422A1 précité d'autres dispositions peuvent être envisagées pour la mise en oeuvre de l'invention. Par exemple la surface du voile des rayons 20 peut être orientée parallèlement à un plan oblique par rapport à l'axe 19. De même les attaches de chaque rayon à la jante d'une part et à l'anneau interne 18, d'autre part, peuvent être alignées dans des directions obliques par rapport à l'orientation radiale.

En ce qui concerne la réalisation des pièces de la roue, la jante 14, les rayons 20 et l'anneau interne peuvent moulés en une seule pièce. La figure 6 représente une telle réalisation dans une variante décrite plus loin pour une enveloppe pneumatique démontable.

Les rayons 20 peuvent être formés avec un matériau élastomérique possédant un module de tension compris par exemple entre 10 et 100 MPa et peuvent comporter si nécessaire des éléments de renforts. De préférence leurs propriétés élastiques doivent être telles qu'ils peuvent revenir à leur longueur initiale après une déformation de 50% ou plus. Différentes classes de matériaux convenables sont indiqués dans le document de référence précité. Les caractéristiques auxquelles doivent satisfaire ces matériaux ainsi que les paramètres ou autres facteurs à prendre en compte dans la conception des rayons eux-mêmes sont également indiqués dans ce document.

Le matériau de la bande flexible utilisée pour réaliser l'anneau de jante 14 est un composé élastomérique, pouvant être pris parmi les caoutchouc naturels et synthétiques, les polyuréthanes, les mousses de caoutchouc ou de polyuréthanes, etc. Ce matériau possède de préférence un module d'élasticité compris entre 9 et 60 MPa. Cette bande peut être renforcée par une membrane possédant une rigidité de traction suffisamment élevée pour la rendre pratiquement inextensible par rapport à ladite bande à laquelle elle est accolée ou dans laquelle elle est intégrée. Selon un exemple de réalisation évoqué dans la demande de brevet internationale précitée, la membrane est intégrée au voisinage de la ligne neutre de la bande flexible de l'anneau de jante, par exemple dans une position décalée radialement légèrement vers l'intérieur, et placée sous tension pour pré contraindre ladite bande.

Lorsque la roue 10 gonflée ne supporte aucune charge (figures 1 et 4a), les rayons 20 sont placés sous une légère tension juste suffisante pour leur permettre d'adopter un profil rectiligne. Si la roue est en contact avec la surface de roulement 35 (figures 2 et 4b), la résultante verticale des efforts appliqués par le véhicule au dispositif de moyeu 16 est orientée vers le bas. Elle est transmise par le dispositif de moyeu 16 et les rayons 20 rattachés à la partie supérieure de l'anneau de jante 14 à l'enveloppe pneumatique 12 et à la surface de roulement 35 qui développe une réaction dont la résultante verticale est dirigée vers le haut. Cette dernière est appliquée en retour à l'enveloppe pneumatique 12 et les efforts de pression résultants sur l'anneau de jante 14 ont une composante verticale orientée vers le haut qui est transmise aux rayons 20 rattachés à sa moitié supérieure. Ainsi les rayons supérieurs 20-1 à 20-9 sont soumis à des efforts dont les résultantes antagonistes produisent leur mise en traction. L'anneau de jante a tendance à s'ovaliser, sa génératrice supérieure 32, c'est à dire la plus éloignée de la surface de roulement 35, tendant à se rapprocher légèrement de la génératrice inférieure 36 en développant un effet d'arc-boutement à l'intérieur de l'anneau de jante 14. Du fait de l'ovalisation de l'anneau de jante 14, les attaches radiales interne et externe du rayon de liaison 20-14 (qui est le plus voisin des génératrices inférieure 33 de l'anneau interne 18 et 36 de l'anneau de jante 14 se rapprochent radialement l'une de l'autre. Le rayon 20-14 non seulement n'est plus tendu mais en fait a légèrement flambé, comme le représente la figure 2, sans exercer de contrainte de compression notable sur les anneaux 14 et 18.

On note sur la figure 2 qu'en raison de l'ovalisation de l'anneau de jante 14, sa partie inférieure, autour de la génératrice 36, a tendance à s'aplatir légèrement en vis-à-vis de l'aire de contact 42 de la bande roulement 40 avec la surface de roulage 35. Ainsi au cours du roulage de la roue 10 en mode gonflé la jante subit une certaine déformation au niveau de l'aire de contact mais qui n'a que peu de rapport avec la déformation correspondante d'une roue élastique du type décrit dans la demande de brevet internationale précitée.

Parmi les avantages de la solution qui vient d'être évoquée pour le roulage en mode gonflé, on peut citer qu'elle est susceptible de procurer des performances élevées en matière de confort, d'endurance, de capacité de charge et de résistance au roulement. Elle offre également un aspect intéressant dans les applications qui privilégient les pneumatiques taille basse pour des raisons d'ordre esthétique ou pour d'autres raisons.

Elle présente aussi un avantage primordial sur le plan de la résistance aux chocs issus de la rencontre de la roue avec toutes sortes d'obstacles sur la chaussée et cela en mode gonflé comme en mode dégradé. Cette propriété s'étend non seulement aux obstacles susceptibles de heurter la bande de roulement proprement dite mais aussi à ceux qui rencontrent les épaules ou les flancs de l'enveloppe pneumatique, comme dans les incidents de chocs trottoir par exemple. Dans tous ces cas en effet l'anneau de jante élastique a l'avantage de s'effacer temporairement devant l'obstacle sans dégradation dommageable de la structure porteuse de la roue dans le véhicule ni de la jante elle-même. Ce dernier avantage est particulièrement significatif pour les chocs latéraux (chocs trottoir) susceptibles d'affecter des enveloppes pneumatiques possédant un flanc très court et ne débordant que peu ou pas du tout au-delà du bord de jante dans la direction axiale externe à l'état gonflé. Dans ce cas en effet le pneu n'offre aucune protection au bord de jante contre l'obstacle. Si la jante n'est que peu déformable, (jante en métal par exemple) un dommage permanent risque de résulter du choc, contrairement au cas qui vient d'être décrit.

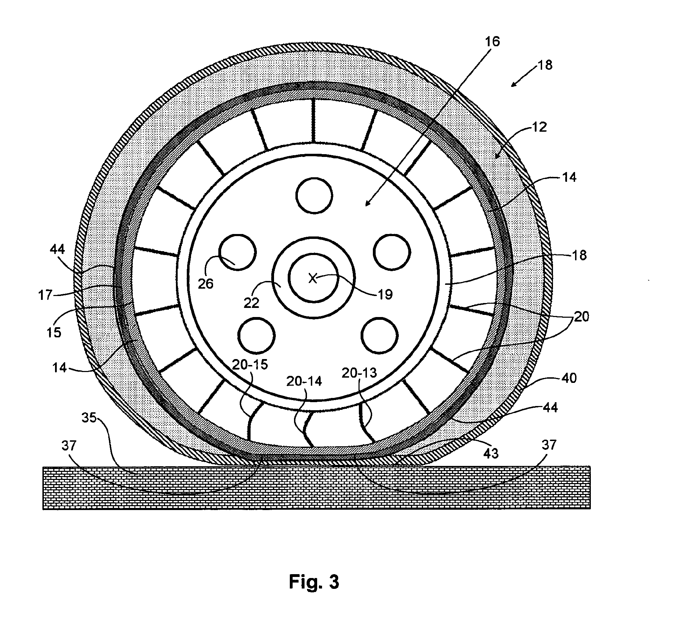

Si l'on examine maintenant les figures 3 et 4c, on voit qu'après une perte de pression quasi-totale de l'enveloppe pneumatique 12 une portion 37 de la surface radialement externe de l'anneau de jante 14, ici recouverte par une paroi basse 44 qui ferme la partie radialement interne de l'enveloppe pneumatique, est entrée en contact avec l'intérieur du sommet de l'enveloppe pneumatique 12, dans une aire de contact 43 avec la surface de roulage 35 qui est plus allongée dans la direction du roulement que l'aire de contact 42 (figure 2) en mode gonflé. De fait, l'enveloppe pneumatique 12 ne joue plus son rôle de support. Une charge importante est appliquée à cette aire de contact à travers cette seule portion de surface 37 de l'anneau de jante 14 qui supporte l'essentiel des efforts verticaux vers le haut engendrés par la réaction du sol. Cette concentration d'efforts à la surface de l'anneau de jante 14 se traduit par un aplatissement plus marqué que précédemment de la courbure de l'anneau de jante 14 au droit de l'aire de contact 43 et un flambage de plus grande amplitude des rayons de liaison 20 en partie basse de la roue. On voit à la figure 3 que cet effet affecte les rayons 20-13, 20-14 et 20-15 de façon plus sensible qu'en roulage en mode gonflé. Mais, grâce à la conception spécifique de jante déformable décrite, le roulage peut se poursuivre bien au-delà de l'incident de perte de pression, dans des conditions d'endurance qui restent convenables sur le plan de la sécurité et du confort et sont en tous cas très préférables aux aléas d'un arrêt forcé dans une situation non prévue.

En se reportant à la figure 4c on peut noter que la mise en contact des faces internes en regard 47 de la paroi basse 44 de l'enveloppe pneumatique 12 et 48 du sommet se produit non seulement dans le sens circonférentiel mais aussi transversalement dans le sens axial du fait de la continuité de la paroi 44. Les pressions de contact entre les deux faces 47 et 48 résultant de la mise à plat peuvent être élevées mais se répartissent de façon relativement uniforme dans toute la surface des zones en contact, ce qui est favorable à l'endurance en cas de fonctionnement dans cette condition. A noter que la figure 4c présente un espace entre les portions inférieures et supérieures du pneumatique. Cet espace est présent pour montrer les deux portions de façon distinctes. En fait, les deux zones sont bel et bien en contact. Une représentation sans cet espace blanc ne permettrait plus de visualiser les deux portions et pourrait engendrer une certaine confusion.

La solution ici décrite fournit ainsi une capacité importante de roulage en mode dégradé, c'est-à-dire après une perte même totale de la pression pneumatique. Même si l'on adopte pour l'ensemble de l'anneau de jante avec ses rayons une construction plus légère que celle qui est nécessitée par la roue élastique précitée de la demande de brevet internationale précitée, l'endurance de cette roue est très satisfaisante y compris pour des roulages en mode étendu de durée relativement longue en respectant une vitesse raisonnable. Dans ce mode la roue conserve aussi une capacité d'absorption ou d'amortissement du passage d'obstacles et des chocs transmis par la surface de roulement.

La solution ici décrite se prête aussi particulièrement bien à la réalisation d'un véritable pneu jante dans lequel l'enveloppe pneumatique et l'anneau de jante sont solidarisés pour former un produit fini.

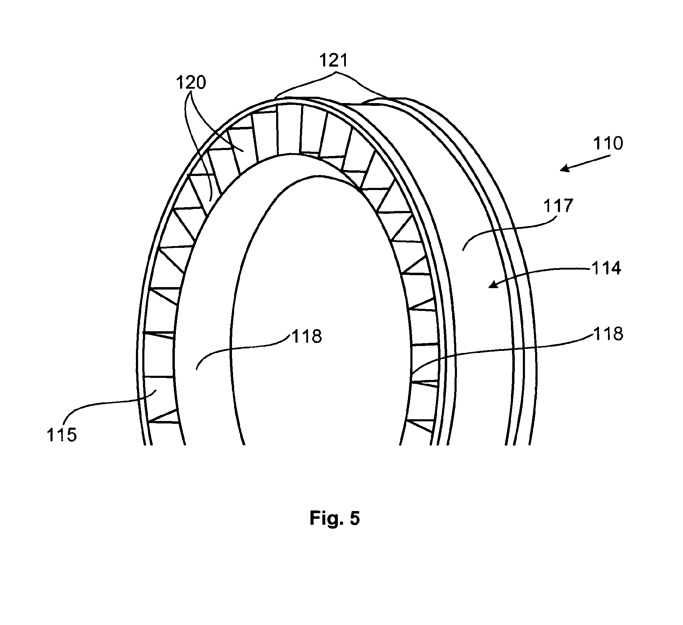

Comme le montrent les figures 5 et 6, l'invention peut aussi être mise en oeuvre avec une enveloppe pneumatique démontable suivant la solution la plus usuelle actuellement, qui permet de remplacer une enveloppe pneumatique usée ou autrement dégradée sans devoir nécessairement changer le reste de la roue. A la figure 5, une structure de jante élastique 110 comprend un anneau de jante 114 dont la face radiale interne 115 est raccordée par un faisceau de rayons de liaison radiaux 120 à un anneau interne 118. L'ensemble de l'anneau de jante 114, l'anneau interne 118 et les rayons 120 est moulé en une pièce autonome 110. La face radiale externe 117 de l'anneau de jante 114 est limitée par deux rebords de jante 121, dont la diamètre externe est supérieur à celui de la face 117 dans sa partie médiane. Du côté axial interne, chacun de ces rebords est relié à la face radiale externe 117 par une surface biseautée, bien visible sur la figure 6, propre à fournir un siège 126 pour recevoir deux sièges 141 et 142 en zone basse 144 d'une enveloppe pneumatique 112 qui permettent de monter cette dernière de façon amovible sur l'anneau de jante 114.

L'enveloppe pneumatique comporte un sommet 146 revêtu d'une bande de roulement 140 représentée ici en appui de roulage en mode gonflé sur une surface de roulement 135. La surface de la bande de roulement 140 est entaillée par des rainures de sculpture antidérapante 147. Elle est reliée à chacune de ses extrémités axiales par deux flancs 149 aux deux zones basses 144 dont les sièges 141 et 142 sont montés sur les sièges de jante 121. Le sommet 146 est renforcé par une armature sommet 150 radialement interne par rapport à la bande de roulement et par une armature de carcasse radiale 152 disposée entre l'armature 150 et la paroi interne 153 de l'enveloppe 112. L'armature de carcasse 152 se prolonge de chaque côté dans chaque flanc 149 jusqu'à la zone basse respective où elle se termine par une extrémité renforcée de part et d'autre par une pile de renforts circonférentiels 154, sans former un véritable bourrelet dont l'épaisseur pourrait être préjudiciable à la continuité de contact entre la face interne de l'enveloppe 112 et les faces internes des zones basses 144 ainsi qu'avec la face 117 de l'anneau de jante 114, lors d'une perte de pression totale à l'intérieur de l'enveloppe pneumatique 112. Pour favoriser encore cette continuité de contact, dont on a vu qu'elle était utile à l'endurance de la roue en mode dégradé, on prévoit que chacune des zones basses 144 se termine dans la direction axiale interne selon une pointe effilée 145 qui se termine au contact de la face 117. Pour la même raison les extrémités axiales externes 129 des rebords de jante 121 ne comportent pas de crochet ni autre protubérance radiale externe susceptible de soumettre la paroi de l'enveloppe pneumatique à de fortes concentrations de contraintes en cas de mise à plat.

L'invention n'est pas limitée aux exemples décrits et représentés et diverses modifications peuvent y être apportées sans sortir de son cadre défini par les revendications annexées.

## Revendications

1. Roue de véhicule comprenant une enveloppe permettant de supporter une charge qui lui est appliquée par le véhicule lorsqu'elle est en appui sur une surface de roulement, sur un anneau de jante (14) sur lequel ladite enveloppe pneumatique (12) est susceptible d'être montée, ledit anneau de jante étant susceptible de fléchir élastiquement sous des efforts à composante radiale et rattaché à un anneau de support (16) par des éléments de liaison (20) présentant une résistance à la traction supérieure à la résistance à la compression et susceptibles de se déformer par flexion sous l'effet de charges correspondant sensiblement à des efforts subis lors du roulage du véhicule en condition standard, l'anneau de support (16) comportant une rigidité supérieure à l'anneau de jante (14), **caractérisée en ce que** ladite enveloppe est une enveloppe pneumatique gonflable à une pression, **en ce que** l'anneau de jante (14) comprend une bande de matériau élastomérique flexible en réponse aux composantes radiales des efforts qui lui sont appliqués et capable de résister par arc-boutement à un affaissement de sa structure, **et en ce que** la bande de matériau élastomérique comprend une couche élastomérique et une armature de précontrainte accolée ou intégrée à cette couche et sensiblement inextensible.

2. Roue de véhicule selon la revendication 1, dans laquelle les éléments de liaison sont des lamelles souples (20) réparties autour de l'axe de roue (19) entre l'anneau de support (16) et l'anneau de jante (14).

3. Roue de véhicule selon l'une des revendications 1 ou 2, dans laquelle lesdits éléments de liaison sont disposés de façon sensiblement radiale.

4. Roue de véhicule selon l'une des revendications 1 à 3, dans laquelle lesdites lamelles (20) sont constituées d'un matériau élastomérique tendu entre l'anneau de jante et l'anneau de support (16).

5. Roue de véhicule selon l'une des revendications 1 à 4, dans laquelle l'enveloppe pneumatique est montée de façon démontable à la périphérie de l'anneau de jante .

6. Roue de véhicule selon l'une des revendications 1 à 5, dans laquelle l'anneau de jante comprend une couche de cisaillement en matériau élastique placée en sandwich entre deux armatures de renfort quasi-inextensibles.

7. Roue de véhicule selon l'une des revendication 1 à 6, dans laquelle ladite enveloppe pneumatique est fermée, et la surface radiale externe dudit anneau de jante (14) est adaptée pour supporter la face radiale interne (44) de ladite enveloppe pneumatique fermée.

8. Roue de véhicule selon la revendication 7, dans laquelle lorsque ledit sommet de l'enveloppe pneumatique s'affaisse par suite d'une perte substantielle de la pression de gonflage, la paroi interne du sommet de l'enveloppe pneumatique fournie un appui en reposant contre la face radiale interne (44) de l'enveloppe pneumatique fermée, et la portion radialement inférieure de l'anneau de jante (14) subit un aplatissement plus prononcé qu'avant ladite perte de pression.

9. Roue de véhicule selon l'une des revendications 1 à 6, dans laquelle l'enveloppe pneumatique comporte une armature de carcasse possédant une extrémité dans chaque bourrelet de l'enveloppe pneumatique (112) et un ancrage pour cette extrémité comprenant des moyens d'ancrage disposés de façon à former un angle d'ancrage inférieur à 30 degrés par rapport à une direction axiale lorsque ledit pneumatique est assemblé.

10. Roue de véhicule selon la revendication 9, dans laquelle ledit angle d'ancrage est inférieur à 15 degrés.

11. Roue de véhicule selon l'une des revendications 9 ou 10, dans laquelle ledit moyen d'ancrage comporte au moins une série de renforts filaires disposés sensiblement parallèlement à la surface de ladite extrémité de carcasse sur une face au moins de ladite extrémité.

12. Roue de véhicule selon l'une des revendications 9 ou 10, dans laquelle la surface radiale externe (117) de l'anneau de jante comporte deux portées de jantes (121) et l'enveloppe pneumatique (112) comporte deux sièges d'appui (141) et (142) propres à se monter sur lesdites portées de jantes.

13. Roue de véhicule selon l'une des revendications 9 à 12, dans laquelle lorsque ledit sommet de l'enveloppe pneumatique s'affaisse par suite d'une perte substantielle de la pression de gonflage, la paroi interne du sommet de l'enveloppe pneumatique fournie un appui en reposant d'une part contre les portions internes des bourrelets et d'autre part contre l'anneau de jante (14) et la portion radialement inférieure de l'anneau de jante (14) subit un aplatissement plus prononcé qu'avant ladite perte de pression.

## Claims

1. Vehicle wheel comprising a tyre cover capable of withstanding a load applied to it by the vehicle when resting on a running surface, on a rim ring (14) on which the said pneumatic tyre cover (12) is liable to be mounted, the said rim ring being capable of flexing elastically under loads with a radial component and attached to a supporting ring (16) by connecting elements (20), the tensile strength of which is greater than the compressive strength and which are liable to deform in bending under the effect of loads corresponding substantially to forces experienced when the vehicle is running along under standard conditions, the supporting ring (16) having a rigidity greater than the rim ring (14), **characterised in that** said tyre cover is a pneumatic tyre cover that can be inflated to a pressure, **in that** the rim ring (14) comprises a strip of elastomeric material capable of flexing in response to the radial components of the forces applied to it and capable by bracing of resisting any collapse of its structure, **and in that** the strip of elastomeric material comprises an elastomeric layer and a prestressed reinforcement stuck to or incorporated into this layer and substantially inextensible.

2. Vehicle wheel according to Claim 1, in which the connecting elements are flexible lamellae (20) distributed about the wheel axis (19) between the supporting ring (16) and the rim ring (14).

3. Vehicle wheel according to one of Claims 1 and 2, in which the said connecting elements are positioned substantially radially.

4. Vehicle wheel according to one of Claims 1 to 3, in which the said lamellae (20) are made of an elastomeric material stretched between the rim ring and the supporting ring (16).

5. Vehicle wheel according to one of Claims 1 to 4, in which the pneumatic tyre cover is removably mounted at the periphery of the rim ring.

6. Vehicle wheel according to one of Claims 1 to 5, in which the rim ring comprises a shear layer made of elastic material sandwiched between two practically inextensible reinforcements.

7. Vehicle wheel according to one of Claims 1 to 6, in which the said pneumatic tyre cover is closed and the external radial surface of the said rim ring (14) is designed to support the internal radial face (44) of the said closed pneumatic tyre cover.

8. Vehicle wheel according to Claim 7, in which when the said crown of the pneumatic tyre cover collapses as a result of a substantial loss of inflation pressure, the internal wall of the crown of the pneumatic tyre cover provides support by resting against the internal radial face (44) of the closed pneumatic tyre cover, and the radially lower portion of the rim ring (14) becomes more flattened than it was before the said loss of pressure.

9. Vehicle wheel according to one of Claims 1 to 6, in which the pneumatic tyre cover comprises a carcass reinforcement that has one end in each bead of the pneumatic tyre cover (112) and anchorage for this end comprising anchoring means positioned in such a way as to form an anchoring angle of less than 30 degrees with respect to an axial direction when the said tyre is assembled.

10. Vehicle wheel according to Claim 9, in which the said anchoring angle is less than 15 degrees.

11. Vehicle wheel according to one of Claims 9 or 10, in which the said anchoring means comprises at least one series of filamentary reinforcing elements arranged substantially parallel to the surface of the said end of carcass on at least one side of the said end.

12. Vehicle wheel according to one of Claims 9 or 10, in which the external radial surface (117) of the rim ring has two rim bearing surfaces (121) and the pneumatic tyre cover (112) has two bearing seats (141) and (142) that can be mounted on the said rim bearing surfaces.

13. Vehicle wheel according to one of Claims 9 to 12, in which when the said crown of the pneumatic tyre cover collapses as a result of a substantial loss of inflation pressure, the internal wall of the crown of the pneumatic tyre cover provides support by resting, on the one hand, against the internal portions of the beads and, on the other hand, against the rim ring (14), and the radially lower portion of the rim ring (14) becomes more flattened than it was before the said loss of pressure.

## Patentansprüche

1. Fahrzeugrad, das einen Mantel, der es ermöglicht, eine Last auszuhalten, die vom Fahrzeug auf ihn ausgeübt wird, wenn er auf einer Lauffläche aufliegt, auf einem Felgenring (14) enthält, auf den der Luftmantel (12) montiert werden kann, wobei der Felgenring sich unter Kräften mit radialer Komponente elastisch biegen kann und an einem Stützring (16) durch Verbindungselemente (20) befestigt ist, die eine höhere Zugfestigkeit als Kompressionsfestigkeit aufweisen und sich durch Biegung unter der Wirkung von Lasten verformen können, die im Wesentlichen Kräften entsprechen, denen sie beim Fahren des Fahrzeugs unter Standardbedingungen ausgesetzt sind, wobei der Stützring (16) eine höhere Steifheit als der Felgenring (14) aufweist, **dadurch gekennzeichnet, dass** der Mantel ein Luftmantel ist, der auf einen Druck aufgepumpt werden kann, dass der Felgenring (14) ein Band aus Elastomermaterial enthält, das als Reaktion auf die radialen Komponenten der auf es ausgeübten Kräfte elastisch ist und durch Gegenstemmen einem Nachgeben seiner Struktur widerstehen kann, und dass das Band aus Elastomermaterial eine Elastomerschicht und eine Vorspannungsbewehrung enthält, die an dieser Schicht befestigt oder in sie integriert und im Wesentlichen nicht dehnbar ist.

2. Fahrzeugrad nach Anspruch 1, bei dem die Verbindungselemente biegsame Lamellen (20) sind, die um die Radachse (19) zwischen dem Stützring (16) und dem Felgenring (14) verteilt sind.

3. Fahrzeugrad nach einem der Ansprüche 1 oder 2, bei dem die Verbindungselemente im Wesentlichen radial angeordnet sind.

4. Fahrzeugrad nach einem der Ansprüche 1 bis 3, bei dem die Lamellen (20) aus einem Elastomermaterial bestehen, das zwischen dem Felgenring und dem Stützring (16) gespannt ist.

5. Fahrzeugrad nach einem der Ansprüche 1 bis 4, bei dem der Luftmantel ausbaubar am Umfang des Felgenrings montiert ist.

6. Fahrzeugrad nach einem der Ansprüche 1 bis 5, bei dem der Felgenring eine Scherschicht aus elastischem Material enthält, die zwischen zwei praktisch nicht dehnbaren Verstärkungsbewehrungen eingeklemmt angeordnet ist.

7. Fahrzeugrad nach einem der Ansprüche 1 bis 6, bei dem der Luftmantel geschlossen und die radiale Außenfläche des Felgenrings (14) geeignet ist, um die radiale Innenseite (44) des geschlossenen Luftmantels zu tragen.

8. Fahrzeugrad nach Anspruch 7, bei dem, wenn der Scheitel des Luftmantels nach einem starken Verlust von Fülldruck nachgibt, die Innenwand des Scheitels des Luftmantels eine Auflage liefert, indem sie gegen die radiale Innenseite (44) des geschlossenen Luftmantels anliegt, und der radial untere Abschnitt des Felgenrings (14) eine stärkere Abflachung als vor dem Druckverlust erfährt.

9. Fahrzeugrad nach einem der Ansprüche 1 bis 6, bei dem der Luftmantel eine Karkassenbewehrung aufweist, die ein Ende in jedem Wulst des Luftmantels (112) und eine Verankerung für dieses Ende besitzt, die Verankerungseinrichtungen enthält, die so angeordnet sind, dass sie einen Verankerungswinkel von weniger als 30 Grad bezüglich einer axialen Richtung bilden, wenn der Luftreifen montiert ist.

10. Fahrzeugrad nach Anspruch 9, bei dem der Verankerungswinkel kleiner als 15 Grad ist.

11. Fahrzeugrad nach einem der Ansprüche 9 oder 10, bei dem die Verankerungseinrichtung mindestens eine Reihe von Drahtverstärkungen aufweist, die im Wesentlichen parallel zur Fläche des Karkassenendes auf mindestens einer Seite des Endes angeordnet sind.

12. Fahrzeugrad nach einem der Ansprüche 9 oder 10, bei dem die radiale Außenfläche (117) des Felgenrings zwei Felgenauflageflächen (121) aufweist, und der Luftmantel (112) zwei Auflagesitze (141) und (142) aufweist, die auf die Felgenauflageflächen montiert werden können.

13. Fahrzeugrad nach einem der Ansprüche 9 bis 12, bei dem, wenn der Scheitel des Luftmantels nach einem starken Fülldruckverlust nachgibt, die Innenwand des Scheitels des Luftmantels eine Auflage liefert, indem sie einerseits gegen die Innenabschnitte der Wülste und andererseits gegen den Felgenring (14) anliegt, und der radial untere Abschnitt des Felgenrings (14) eine deutlichere Abflachung als vor dem Druckverlust erfährt.
